# EUROPEAN PATENT SPECIFICATION

(11) **EP 3 040 799 B1**
(45) Date of publication and mention of the grant of the patent: **01.01.2020**
(21) Application number: 15192942.9
(22) Date of filing: 04.11.2015
(51) Int. Cl.: F16K 11/00, G05D 7/01

(54) **LIQUID FLOW CONTROL DEVICE**
FLÜSSIGKEITSSTRÖMUNGSREGLER
DISPOSITIF DE CONTRÔLE DE DÉBIT DE LIQUIDE

(30) Priority: 30.12.2014 ES 201431692 U
(43) Date of publication of application: 06.07.2016
(73) Proprietor: Caspro, S.A., 08759 Vallirana - Barcelona (ES)
(72) Inventor: TRES CASAS, Daniel, 08759 Vallirana - Barcelona (ES)
(74) Representative: Ungria López, Javier

(56) References cited:
- GB-A- 699 446
- US-A- 4 161 965
- US-A- 5 209 265
- US-A1- 2012 118 998

## Description

### OBJECT OF THE INVENTION

As expressed in the title of the present description, the present invention refers to a liquid flow control device in shower-hose single-lever tap cartridges, handsets, shower sprayers, etc. The device of the invention is, firstly, capable of maintaining a constant outlet flow despite variations in the liquid pressure and, secondly, capable of minimizing the noise level produced by the flow of said liquid at its outlet.

The control device of the invention is highly versatile, being also applicable to other devices and apparatuses that are not taps, where there is a liquid passage and the device of the invention may be mounted.

### BACKGROUND OF THE INVENTION

In the current state of the art, there are known flow control devices to be included in single-lever tap cartridges and to attempt to maintain constant water flow despite the supply network undergoing pressure variations. US 5 209 265 A discloses such a flow control device.

This is especially important when said cartridges are assembled in taps wherein the water-supply pipe must maintain a regular and constant flow, such as in washbasins or bathtubs with waterfall spouts.

These control devices usually give rise to clogging problems as a consequence of the systems employed to achieve said control, normally based on the existence of multiple micro-holes which become clogged with elements reacting to pressure increases, so that water impurities end up clogging them, thus leaving them inoperative.

### DESCRIPTION OF THE INVENTION

With the aim of attaining the goals and avoiding the inconveniences mentioned in previous sections, the invention proposes a liquid control device intended to be installed in a liquid passage to maintain a constant flow of said liquid.

It comprises at least a first liquid flow control piece containing a through orifice with a controllable passage section of the liquid flow, wherein the controllable passage section varies based on the water pressure affecting a deformable tubular extension that defines said controllable passage section that comprises the through orifice. The pressure difference of the circulating liquid on an inner surface and outer surface of the tubular extension modifies the controllable passage section maintaining a constant flow of the liquid; the device being coupled to a support body. The first piece is manufactured with an elastomeric material. In an embodiment, said support body is a single-lever tap cartridge.

The through orifice of the first piece contains an end stretch constituting the controllable passage section composed of the tubular extension. The exterior of said tubular extension is defined by an external annular channel that is flooded with liquid. An increase in the liquid pressure within the external annular channel bends and deforms the circular extension inwards, thus reducing the passage of circulating liquid.

The external annular channel of the first piece contains angular cross section in angular shape with a vertex, as a bottom, that is rounded.

The tubular extension of the first piece contains a tapered configuration, whose minor annular base composes a tapered mouth in inverted position which converges inwards to the through orifice of the first piece.

The through orifice of the first piece features a tapered configuration with an inner generatrix that is a curved line convergent towards the direction of the entrance of the liquid.

The device of the invention also comprises a second piece that dampens the noise level of the liquid flow circulating through the first piece and the second piece, both pieces being located respectively in the first box and in a second box, both located in the support body. The second piece maintains the position of the first piece placed upstream the second piece.

In an embodiment, the incorporation of an additional first piece is considered, which is placed in the opposite place of the second piece with respect to the first piece.

The second piece contains an open cavity for the passage of water that incorporates in its interior some reliefs which reduce the sound level of the liquid circulation, wherein said open cavity is defined by a bottom and an encasing lateral side.

In a first embodiment, said reliefs comprise aligned tapered lugs which are arranged from the bottom of the open cavity of the second piece, wherein said tapered lugs are joined to the bottom through their bigger bases, whereas their smaller bases are composed of curved-convex surfaces.

In a second embodiment, the reliefs comprise a gear tooth pattern located in an inner part of the encasing lateral side of the open cavity.

In a third embodiment, the reliefs comprise prismatic lugs aligned progressively based on their height which are arranged from the bottom of the open cavity of the second piece; wherein said prismatic lugs are joined to the bottom of the open cavity through some of their bases, whereas the opposite bases are composed of inclined planes, being the highest prismatic lug joined to the innermost part of the encasing lateral side of the open cavity.

The second piece holds a T-shaped cross section structure, in the vertical crossbar of which the open cavity is formed.

Hereinafter, in order to give a better understanding of the present description, the object of the invention has been detailed in a series of drawings that are an integral part thereof. Said drawings are included for illustration purposes and shall not be construed as limiting the description.

### BRIEF DESCRIPTION OF THE DRAWINGS

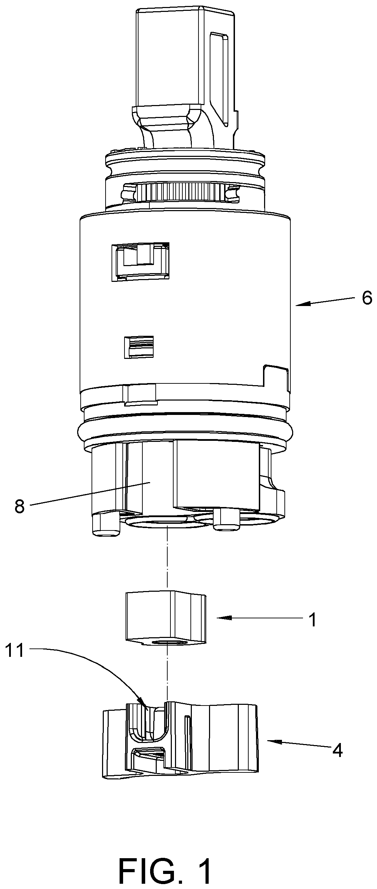

Figure 1 shows an exploded perspective view of a single-lever tap cartridge along with the liquid flow control device, which is the object of the invention. It basically comprises a first piece that controls the flow and a second piece that minimizes the noise level of the liquid.
Figure 2 shows a sectional view of the device of the invention.

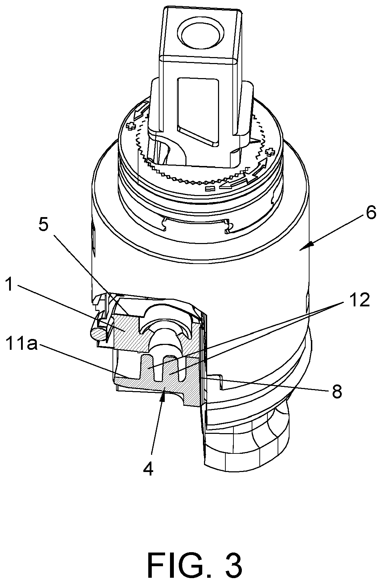

Figure 3 shows a perspective view of the single-lever tap cartridge including the device of the invention.

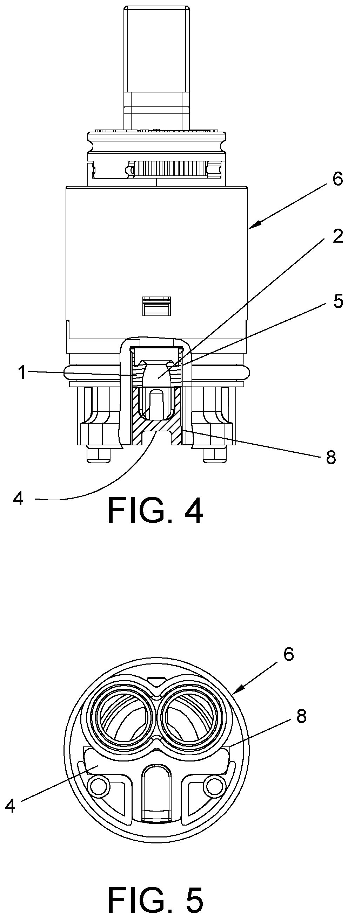

Figure 4 shows an elevation view of what has been represented in the previous figure.
Figure 5 shows a plan view of the single-lever tap cartridge highlighting the plan shape of boxes wherein the device of the invention is located.
Figures 6a to 6c show three embodiments of the second piece which minimizes the noise level of the liquid.
Figure 7 shows a view similar to Figure 1 which also includes an additional first piece to control the liquid flow.

### DESCRIPTION OF A SAMPLE EMBODIMENT

Considering the numbering adopted in the figures, the liquid flow control device comprises a first water flow control piece (1) manufactured with an elastomeric material, preferably silicone, which contains a through orifice (2) with a controllable passage section (2a) of the water flow that varies based on the water pressure affecting a tubular extension (3) that defines said controllable passage section (2a) comprising the through orifice (2).

The device of the invention is complemented with a second piece (4) that minimizes and dampens the noise level of the water flow while circulating through the controllable passage section (2a) of the first piece (1) and through the second piece (4).

The first piece (1) is adjusted within the first box (5) of a single-lever tap cartridge (6) and the second piece (4) is adjusted within a second box (8) of that same cartridge (6), so that the second piece (4), apart from performing its specific function of minimizing the noise level of the water, also performs the function of maintaining the first piece (1) within its first box (5). It is worth noting that the first box (5) is located in a position more inside the cartridge than the second box (8).

The first piece (1) for the liquid flow control has the through orifice (2) through which the water flow circulates, so that said through orifice (2) comprises an end stretch constituting the controllable passage section (2a) composed of the tubular extension (3), the exterior of which is defined by an external annular channel (10) that is flooded with water. An increase in the pressure of said water within the external annular channel (10) bends and deforms the tubular extension (3) inwards of the first piece (1), choking the passage of water while circulating through the controllable passage section (2a) of the first piece (1).

Therefore, the more water pressure, the more the controllable passage section (2a) is choked, thus reducing the passage of liquid maintaining a constant flow. It is worth noting that when pressure increases in the area where the first flow control piece (1) is located, greater pressure is exerted in the external annular channel (10) than in the interior of the controllable passage section (2a) defined by the tubular extension (3), this pressure increase being what bends the tubular extension (3) inwards, reducing the controllable passage section (2a) to maintain the same circulating water flow constant.

On the contrary, as the pressure is reduced in the area where the first flow control piece (1) is located, pressures become balanced in the external annular channel (10) and in the controllable passage section (2a); therefore, said controllable passage section (2a) increases maintaining the same water flow in circulation.

To summarize, the water flow circulating through the controllable passage section (2a) of the first piece (1) is always kept constant, both when there is pressure difference between the external annular channel (10) and the controllable passage section (2a), and when the pressures are balanced in both areas (2a, 10), in such a way that in this case the tubular extension (3) remains stable without bending or deforming.

For example, it has been proven that at a specific pressure the water flow reaches 14 litres per minute when the first piece (1) has not been incorporated and, when said first piece (1) of the invention has been incorporated, the water flow may be reduced to 5 litres per minute, which is optimum for the correct operation of a pipe through which water finally flows outside.

Since this progressive choking of the water flow in circulation causes certain turbulence that generates noise, the device of the invention is complemented with the second piece (4) acting as a lid (4), which apart from helping to maintain the first piece (1) in its place as it has been previously referred to, in the body of the single-lever tap cartridge (6), said second piece (4) is provided with an internal geometry that minimizes the noise level caused in the outlet of the first flow control piece (1), in such a way that the water circulates through the first piece (1) and also through the second piece (4).

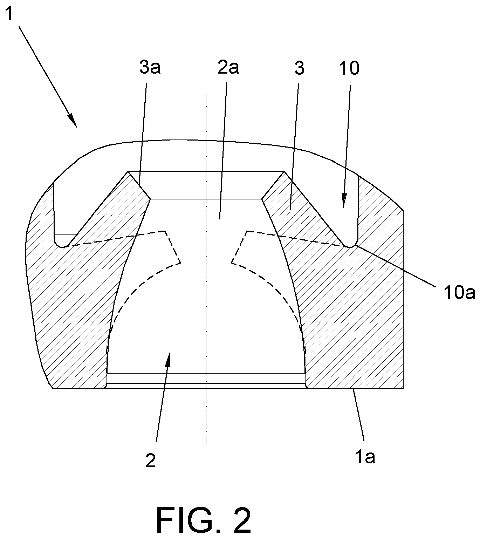

As represented in figure 2, the external annular channel (10) of the first piece (1) contains a cross section in an angular shape with a vertex, as a bottom (10a), that is rounded. In addition, the tubular extension (3) of said first piece (1) features a hollow tapered configuration. The generatrix of the outer surface of the tubular extension (3) is a straight line that is simultaneously part of the external annular channel (10). The generatrix of the inner surface of the tubular extension (3) is a curved line convergent towards the direction of the entrance of liquid. Both the inner and outer surfaces are joined with a minor annular base (3a) that composes a tapered mouth in an inverted position with respect to the entrance of liquid.

The first piece (1) is composed of a flat base (1a) which leans against the second piece (4), in order to maintain the first piece (1) for the water flow control.

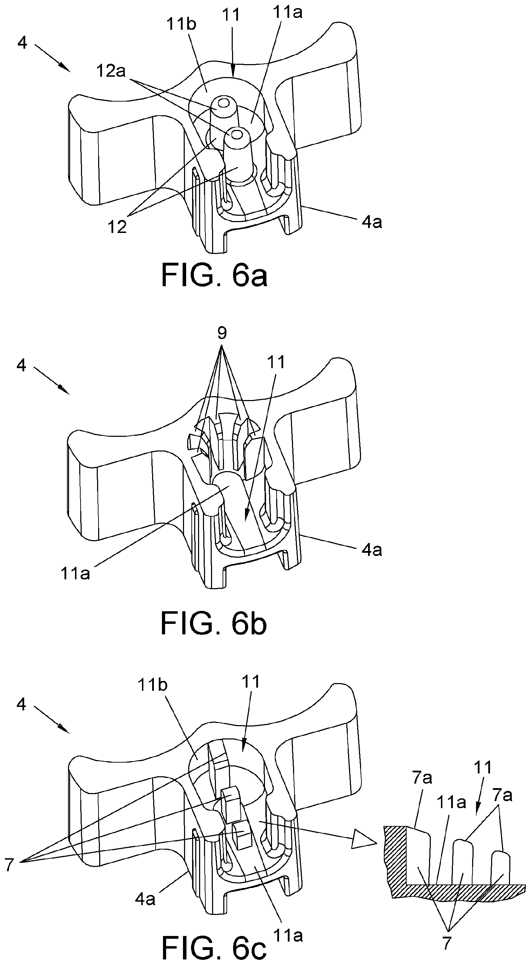

In order to minimize and dampen the noise generated by water turbulence, the second piece (4) holds a T-shaped structure, in the vertical cross-bar (4a) of which an open cavity (11) is formed for water passage containing reliefs inside according to the three embodiments shown in the figures 6a, 6b and 6c depending on the noise level to be reduced. Said open cavity (11) is defined by a closed bottom (11a) and an encasing lateral side (11b) that is open by the free end of the vertical crossbar (4a).

In the embodiment shown in Figure 6a, the reliefs comprise aligned tapered lugs (12) which are arranged from the bottom (11a) of the open cavity (11) of the second piece (4). Said tapered lugs (12) are joined to the bottom (11a) through their bigger bases (12a), whereas their smaller bases are rounded.

In an embodiment shown in Figure 6b, the reliefs comprise a gear tooth pattern (9) located in an inner part of the encasing lateral side (11b) of the open cavity (11).

In the embodiment shown in Figure 6c, the reliefs comprise prismatic lugs (7) progressively aligned based on their height which are arranged from the bottom (11a) of the open cavity (11) of the second piece (4). These prismatic lugs (7) are joined to the bottom (11a) of the open cavity (11) through some of their bases, whereas the opposite bases are composed of inclined planes (7a). In addition, the highest prismatic lug (7) is joined to the innermost part of the encasing lateral side (11b) of the open cavity (11), confluence of the two bars forming the "T" shape.

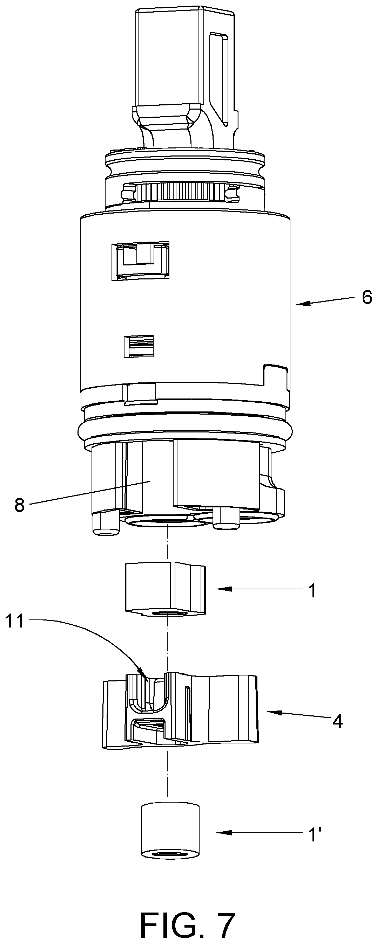

In an embodiment such as that shown in Figure 7, an additional first piece (1') has been considered, having an external circular shape placed in the opposite side of the second piece (4) with respect to the first piece (1), such that in this embodiment the first piece (1) is placed upstream the second piece (4) and an additional first piece (1') is placed downstream said second piece (4) controlling the noise level of the water.

The internal structure of the additional first piece (1') is the same as the internal structure of the first piece (1).

On the other hand, the reliefs of the second piece (4) may have geometries and distributions different from those shown in the Figures, depending on the application of the product and the flow needed to be achieved, such that said flow restricts both the diameter of the through orifice (2) of the first piece (1) and the size thereof; thus forcing the redesign of the reliefs of the second piece (4) until the maximum reduction of noise is attained.

## Claims

1. A liquid flow control device, intended to be installed in a liquid passage to maintain a constant flow of said liquid, **characterized in that** it is fixed in a supporting body and comprises:
- a first piece (1) to control the liquid flow featuring a through orifice (2) containing a tapered configuration with an inner generatrix that is a curved line convergent towards the direction of the entrance of the liquid that incorporates a controllable passage section (2a) of the liquid flow, composed by a deformable tubular extension (3) that upstream defines an external annular channel (10) that contains a cross section in an angular shape with a vertex, as a bottom, that is rounded and causes the accumulation of liquid and an increase in the liquid pressure in the external annular channel (10) that deforms the tubular extension (3) inwards, reducing the controllable passage section (2a) and said reduction varying depending on the water pressure influencing the deformable tubular extension (3), which features a hollow tapered configuration, whit a minor annular base (3a) that composes a tapered mouth in inverted position converging inwards in the through orifice (2) of the first piece (1), and
- a second piece (4) that holds the first piece (1) and contains an open cavity (11) for the passage of water that incorporates in its interior some reliefs which reduce the sound level of the liquid circulation, said open cavity (11) being defined by a bottom (11a) and a encasing lateral side (11b), both pieces (1, 4) being located respectively in a first box (5) and a second box (8), of the support body.

2. A liquid flow control device, according to claim 1, **characterized in that** the first piece (1) is manufactured with an elastomeric material.

3. A liquid flow control device, according to claim 1, **characterized in that** the reliefs comprise aligned tapered lugs (12) which are arranged from the bottom of the open cavity (11) of the second piece (4), said tapered lugs (12) being joined to the bottom (11a) through the bigger bases, and the smaller bases (12a) being rounded.

4. A liquid flow control device, according to claim 1, **characterized in that** the reliefs comprise a gear tooth pattern (9) located in an inner part of the encasing lateral side (11b) of the open cavity (11).

5. A liquid flow control device, according to claim 1, **characterized in that** the reliefs comprise prismatic lugs (7) progressively aligned based on their height which are arranged from the bottom (11a) of the open cavity (11) of the second piece (4), said prismatic lugs being joined to the bottom (11a) of the open cavity (11) through some of their bases, and the opposite bases being composed of inclined planes (7a), being the highest prismatic lug (7) joined to the innermost part of the encasing lateral side (11b) of the open cavity (11).

6. A liquid flow control device, according to any of the preceding claims, **characterized in that** the second piece (4) holds a T-shaped cross section structure, in the vertical crossbar (4a) of which the open cavity (11) is formed

7. A liquid flow control device, according to any of the preceding claims, **characterized in that** it comprises an additional first piece (1') which is placed downstream the second piece (4) in combination with the first piece (1) placed upstream the second piece (4) controlling the noise level of the water.

8. A liquid flow control device, according to claim 7, **characterized in that** the additional first piece (1') has an external circular shape.

9. A liquid flow control device, according to any of the preceding claims, **characterized in that** the support body is a single-lever tap cartridge (6).

## Patentansprüche

1. Flüssigkeitsstrom-Steuerungsvorrichtung, die zum Installieren in einem Flüssigkeitskanal bestimmt ist, um einen konstanten Strom der Flüssigkeit aufrechtzuerhalten, **dadurch gekennzeichnet, dass** sie in einem Aufnahmekörper befestigt ist und umfasst:
- ein erstes Teil (1) zum Steuern des Flüssigkeitsstroms, das eine Durchgangsöffnung (2) aufweist, die eine konische Form mit einer inneren Erzeugenden einschließt, die eine gekrümmte Linie ist, die auf die Richtung des Eintritts der Flüssigkeit zuläuft, die einen steuerbaren Durchlass-Querschnitt (2a) des Flüssigkeitsstroms enthält, zusammengesetzt aus einer verformbaren rohrförmigen Verlängerung (3), die stromaufwärts einen äußeren ringförmigen Kanal (10) bildet, der einen Querschnitt in einer Winkelform mit einem Scheitelpunkt als Boden einschließt, der abgerundet ist und die Ansammlung von Flüssigkeit sowie eine Erhöhung des Flüssigkeitsdrucks in dem äußeren ringförmigen Kanal (10) verursacht, durch die die rohrförmige Verlängerung (3) nach innen verformt wird, der steuerbare Durchlass-Querschnitt (2a) verkleinert wird, wobei die Verkleinerung in Abhängigkeit von dem Wasserdruck variiert, der die verformbare rohrförmige Verlängerung (3) beeinflusst, die eine hohle konische Form mit einer kleinen ringförmigen Basis (3a) aufweist, die eine konische Mündung an umgekehrter Position bildet, die in der Durchgangsöffnung (2) des ersten Teils (1) nach innen zusammenläuft, sowie
- ein zweites Teil (4), das das erste Teil (1) hält und einen offenen Hohlraum (11) für den Durchlass von Wasser einschließt, der in seinem Inneren einige Relief-Strukturen enthält, die den Geräuschpegel der Flüssigkeitszirkulation reduzieren, wobei der offene Hohlraum (11) durch einen Boden (11a) und eine umschließende Querseite (11b) begrenzt wird, und beide Teile (1, 4) in einem ersten Gehäuse (5) bzw. einem zweiten Gehäuse (8) des Aufnahmekörpers angeordnet sind.

2. Flüssigkeitsstrom-Steuerungsvorrichtung nach Anspruch 1, **dadurch gekennzeichnet, dass** das erste Teil (1) aus einem Elastomermaterial hergestellt ist.

3. Flüssigkeitsstrom-Steuerungsvorrichtung nach Anspruch 1, **dadurch gekennzeichnet, dass** die Relief-Strukturen fluchtende konische Nasen (12) umfassen, die von dem Boden des offenen Hohlraums (11) des zweiten Teils (4) ausgehend angeordnet sind, wobei die konischen Nasen (12) mit dem Boden (11a) über die größeren Enden verbunden sind und die kleineren Enden (12a) abgerundet sind.

4. Flüssigkeitsstrom-Steuerungsvorrichtung nach Anspruch 1, **dadurch gekennzeichnet, dass** die Relief-Strukturen eine Zahnradform (9) umfassen, die sich in einem Innenteil der umschließenden Querseite (11 b) des offenen Hohlraums (11) befindet.

5. Flüssigkeitsstrom-Steuerungsvorrichtung nach Anspruch 1, **dadurch gekennzeichnet, dass** die Relief-Strukturen prismenförmige Nasen (7) umfassen, die entsprechend ihrer Höhe fortlaufend ausgerichtet sind und von dem Boden (11 a) des offenen Hohlraums (11) des zweiten Teils (4) ausgehend angeordnet sind, wobei die prismenförmigen Nasen mit dem Boden (11a) des offenen Hohlraums (11) über einige ihrer Enden verbunden sind und die gegenüberliegenden Enden aus geneigten Ebenen (7a) bestehen, wobei die höchste prismenförmige Nase (7) mit dem innersten Teil der umschließenden Querseite (11 b) des offenen Hohlraums (11) verbunden ist.

6. Flüssigkeitsstrom-Steuerungsvorrichtung nach einem der vorangehenden Ansprüche, **dadurch gekennzeichnet, dass** das zweite Teil (4) eine Struktur mit T-förmigem Querschnitt trägt, in deren vertikalem Querstück (4a) der offene Hohlraum (11) ausgebildet ist

7. Flüssigkeitsstrom-Steuerungsvorrichtung nach einem der vorangehenden Ansprüche, **dadurch gekennzeichnet, dass** sie ein zusätzliches erstes Teil (1') umfasst, das stromab von dem zweiten Teil (4) in Kombination mit dem ersten Teil (1) angeordnet ist, das stromauf von dem zweiten Teil (4) angeordnet ist und den Geräuschpegel des Wassers steuert.

8. Flüssigkeitsstrom-Steuerungsvorrichtung nach Anspruch 7, **dadurch gekennzeichnet, dass** das zusätzliche erste Teil (1') eine Kreis-Außenform hat.

9. Flüssigkeitsstrom-Steuerungsvorrichtung nach einem der vorangehenden Ansprüche, **dadurch gekennzeichnet, dass** der Aufnahmekörper eine Einhebelmischer-Kartusche (6) ist.

## Revendications

1. Dispositif de contrôle d'écoulement de liquide, destiné à être installé dans un passage de liquide pour maintenir un écoulement constant dudit liquide, **caractérisé en ce qu'**il est fixé dans un corps de support et comprend :
- une première pièce (1) pour contrôler l'écoulement de liquide caractérisant un orifice transversal (2) contenant une configuration conique avec une génératrice interne qui est une ligne courbée convergente vers la direction de l'entrée du liquide qui incorpore une section de passage contrôlable (2a) de l'écoulement de liquide, composée par une extension tubulaire déformable (3) qui définit en amont un canal annulaire externe (10) qui contient une section transversale dans une forme angulaire avec un sommet, comme un fond, qui est arrondi et occasionne l'accumulation de liquide et une augmentation de la pression de liquide dans le canal annulaire externe (10) qui déforme l'extension tubulaire (3) vers l'intérieur, réduisant la section de passage contrôlable (2a) et ladite réduction variant selon la pression d'eau influençant l'extension tubulaire déformable (3), qui caractérise une configuration conique creuse, avec une base annulaire mineure (3a) qui constitue une embouchure conique dans une position inversée convergent vers l'intérieur dans l'orifice transversal (2) de la première pièce (1), et
- une seconde pièce (4) qui supporte la première pièce (1) et contient une cavité ouverte (11) pour le passage d'eau qui incorpore dans son intérieur certains reliefs qui réduisent le niveau sonore de la circulation de liquide, ladite cavité ouverte (11) étant définie par un fond (11a) et un côté latéral recouvrant (11b), les deux pièces (1, 4) étant disposées respectivement dans une première boîte (5) et une seconde boîte (8), du corps de support.

2. Dispositif de contrôle d'écoulement de liquide, selon la revendication 1, **caractérisé en ce que** la première pièce (1) est fabriquée avec un matériau élastomère.

3. Dispositif de contrôle d'écoulement de liquide, selon la revendication 1, **caractérisé en ce que** les reliefs comprennent des ergots coniques alignés (12) qui sont disposés à partir du fond de la cavité ouverte (11) de la seconde pièce (4), lesdits ergots coniques (12) étant joints au fond (11a) par l'intermédiaire des bases plus grandes, et les bases plus petites (12a) étant arrondies.

4. Dispositif de contrôle d'écoulement de liquide, selon la revendication 1, **caractérisé en ce que** les reliefs comprennent un motif de dent d'engrenage (9) disposé dans une partie interne du côté latéral recouvrant (11b) de la cavité ouverte (11).

5. Dispositif de contrôle d'écoulement de liquide, selon la revendication 1, **caractérisé en ce que** les reliefs comprennent des ergots prismatiques (7) progressivement alignés sur la base de leur hauteur qui sont disposés à partir du fond (11a) de la cavité ouverte (11) de la seconde pièce (4), lesdits ergots prismatiques étant joints au fond (11a) de la cavité ouverte (11) par l'intermédiaire de certaines de leurs bases, et les bases opposées étant composées de plans inclinés (7a), en étant l'ergot prismatique le plus élevé (7) joint à la partie la plus interne du côté latéral recouvrant (11b) de la cavité ouverte (11).

6. Dispositif de contrôle d'écoulement de liquide, selon l'une quelconque des revendications précédentes, **caractérisé en ce que** la seconde pièce (4) supporte une structure de section transversale en forme de T, dans la barre transversale verticale (4a) dont la cavité ouverte (11) est formée.

7. Dispositif de contrôle d'écoulement de liquide, selon l'une quelconque des revendications précédentes, **caractérisé en ce qu'**il comprend une première pièce supplémentaire (1') qui est placée en aval de la seconde pièce (4) en combinaison avec la première pièce (1) disposée en amont de la seconde pièce (4) contrôlant le niveau sonore de l'eau.

8. Dispositif de contrôle d'écoulement de liquide, selon la revendication 7, **caractérisé en ce que** la première pièce supplémentaire (1') présente une forme externe circulaire.

9. Dispositif de contrôle d'écoulement de liquide, selon l'une quelconque des revendications précédentes, **caractérisé en ce que** le corps de support est une cartouche de robinet à levier unique (6).
